(19) Europäisches Patentamt
European Patent Office
Office européen des brevets

(11) Numéro de publication: **0 330 544 A1**

(12) # DEMANDE DE BREVET EUROPEEN

(21) Numéro de dépôt: **89400381.3**

(22) Date de dépôt: **10.02.89**

(51) Int. Cl.$^4$: **C 08 G 73/06**
C 08 F 138/00

(30) Priorité: **23.02.88 FR 8802279**

(43) Date de publication de la demande:
**30.08.89 Bulletin 89/35**

(84) Etats contractants désignés: **BE DE GB NL**

(71) Demandeur: **CENTRE D'ETUDES DES MATERIAUX ORGANIQUES POUR TECHNOLOGIES AVANCEES**
**Autoroute Lyon-Vienne Echangeur de Solaize-Vernaison Solaize**
**F-69390 Vernaison (FR)**

(72) Inventeur: **Mercier, Régis**
**34, rue du Commandant Charcot**
**F-69000 Lyon (FR)**

**Sillion, Bernard**
**93, rue Joliot Curie**
**F-69005 Lyon (FR)**

(74) Mandataire: **Aubel, Pierre**
**Institut Français du Pétrole Département Brevets 4, avenue de Bois Préau**
**F-92502 Rueil-Malmaison (FR)**

(54) **Résines quinazolones thermodurcissables leur préparation et leurs applications.**

(57) On décrit des résines quinazolones thermodurcissables, leur préparation et leurs applications.

Ces résines quinazolones thermodurcissables peuvent être définies comme répondant à la formule générale

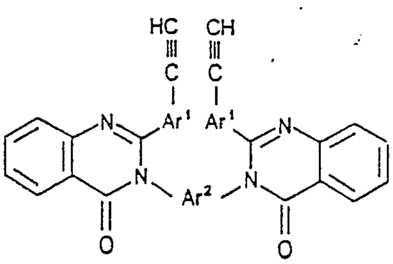

dans laquelle $Ar^1$ $_2$ est un radical aromatique divalent monocyclique ou polycyclique et Ar est un radical aromatique divalent de plusieurs cycles aromatiques simples reliés deux à deux par des atomes ou groupements divalents.

Ces radicaux $Ar^1$ et $Ar^2$ sont choisis de manière que la température de fusion ou de ramollissement soit comprise entre 80°C et 170°C.

Les résines peuvent être préparées par condensation d'une éthynylarylbenzoxazinone sur une diamine aromatique contenant des groupes flexibilisants.

Ces résines quinazolones peuvent être utilisées par polymérisation en masse pour préparer notamment les adhésifs ou des matrices de composites.

EP 0 330 544 A1

## Description

## RESINES QUINAZOLONES THERMODURCISSABLES LEUR PREPARATION ET LEURS APPLICATIONS

La présente invention a pour objet des résines organiques résistant à la température et polymérisant en masse sans dégagement de produits volatils.

Les structures thermostables, leur chimie et leurs propriétés sont maintenant bien décrites (P.E. Cassidy, "Thermally Stable Polymers", Marcel Dekker, 1980, et J.P. Critchley, G.J. Knight, W.W. Wright, "Heat Resistant Polymers", Plenum Press 1983). Ces matériaux trouvent notamment des applications dans des domaines industriels tels que l'électrotechnique, l'électronique, la microélectronique ou les techniques de séparation. On distingue les polymères thermostables thermoplastiques, dont la chaine principale aromatique ou hétérocyclique est rendue plus flexible par des liaisons éther, sulfure, perfluoroisopropylidène ou autres. Ces polymères peuvent être mis en oeuvre à partir de solutions ou bien en masse au-dessus de la température de transition vitreuse ou de la température de fusion pour leurs utilisations par exemple comme adhésifs ou dans des matériaux composites. Dans ces conditions, il faut appliquer de fortes pressions et la tenue thermique du matériau est limitée par les transitions vitreuses ou cristallines.

La seconde classe de polymères recherchés pour les applications structurales est celle des thermodurcissables. Certains sont linéaires. On les met en oeuvre sous forme d'oligomères fonctionnels de faible masse moléculaire et la polycondensation se poursuit dans les conditions de la mise en oeuvre. C'est le cas des polybenzhydrolimides décrits notamment dans le brevet FR-A-1 601 091. L'inconvénient de ces résines est le dégagement de produits volatils durant la polycondensation.

On retrouve cet inconvénient avec les résines PMR ("polymerization of monomeric reactants"), notamment celles commercialisées sous le nom de PMR 15. Ce sont des mélanges obtenus par condensation entre le diester de méthyle de l'acide benzophénone tétracarboxylique, le monoester méthylique de l'acide nadique et une diamine aromatique telle que par exemple le diamino-4,4′-diphénylméthane. Les proportions de réactifs sont calculées pour que la masse moléculaire théorique du produit soit d'environ 1500 et que toutes les molécules soient terminées par des groupes nadiques à chaque extrémité. Au moment de la mise en oeuvre, la condensation et les réactions d'imidation se produisent, puis, à plus haute température (270° C) environ, la polymérisation des extrémités réactives intervient, provoquant la réticulation du système (T.T. Serafini, P. Delvigs, G.R. Lightsey, J. Appl. Polym. Sci., 16, 905, 1972).

Ces réactifs sont instables à température ambiante et d'une mise en oeuvre délicate. Cette évolution vers des systèmes thermodurcissables thermostables pose donc au moins deux problèmes importants : le choix de l'enchaînement entre les fonctions réactives et le choix des deux fonctions réactives terminales. L'enchaînement entre les fonctions réactives ne doit pas dégager de produits volatils durant la mise en oeuvre et par conséquent doit être totalement condensé et/ou cyclisé. Par ailleurs, c'est la nature de cet enchaînement qui va fixer le point de ramollissement de la résine avant réaction, mais aussi la transition vitreuse du réseau après réticulation.

Pour ce qui est des deux fonctions réactives, on distingue trois grandes familles : les fonctions maléimides, nadimides et acétyléniques.

Les fonctions acétyléniques polymérisent à basse température : très lentement dès 150° C et rapidement à 200° C.

La polymérisation des maléimides dépend considérablement de l'environnement et trois types de polycondensation sont identifiés : polymérisation d'addition nucléophile (addition de Michael), polymérisation radicalaire, polymérisation anionique. Il est difficile de contrôler les réactions de mise en oeuvre et si l'on considère la polycondensation par addition de diamine, la présence d'amine libre dans la résine rend ce type de matériau dépendant de la législation en matière de toxicité. La polymérisation des groupements nadiques fait intervenir une réaction de rétro Diels-Alder qui libère une fonction maléimide et une molécule de cyclopentadiène. La mise en oeuvre de ce type de résine nécessite donc un choix délicat de température et de pression pour que le diène volatil s'incorpore par polymérisation dans le matériau.

Il n'est donc pas étonnant de voir que, pour de nouvelles résines thermostables, le choix de la fonction réactive s'oriente vers les résines éthynylées malgré une certaine difficulté de synthèse pour introduire la fonction acétylénique dans la molécule. La résine Thermid 600 (commercialisée par National Starch) est un exemple d'oligoimide (ou isoimide) terminé par une fonction éthynyle à chaque extrémité. Cependant, il faut noter que ces résines fondent à une température supérieure à la température de début de polymérisation des acétyléniques, ce qui est un inconvénient, car il sera difficile de bien mouiller le renfort si l'on ne passe pas par un état fondu.

Il en est de même pour la plupart des résines quinoxalines terminées par des groupes acétyléniques étudiées par la NASA et dénommées ATQ (demande de brevet US n° 518.897 ou R.F. Kovar,G.F.L. Ehlers, F.E. Arnold, Polym. Prep. Am. Chem. Soc. Div. Polym. Chem. 16 (2) 246 1975).

C'est, d'une manière générale, l'inconvénient de la plupart des résines hétérocycliques qui sont intrinsèquement rigides. On a tenté de contourner cette difficulté en abondonnant l'enchaînement hétérocyclique au profit d'enchaînements de type éther sulfone. Les résines obtenues, dénommées ATS, permettent un stade fusible avant la réticulation des groupements acétyléniques terminaux (brevet US A 4 131 625 et R.F. Kovar, G.F.L. Ehlers, F.E. Arnold, J. Polym. Sci., Polym. Chem. Ed. 15, 1981, 1977). Par contre, la température de transition vitreuse du réseau réticulé est souvent basse.

On a maintenant découvert que certains hétérocycles quinazolones peuvent permettre l'obtention de résines acétyléniques présentant des températures de fusion ou de ramollissement assez basses pour que la polymérisation de l'acétylénique débute à l'état fondu. En outre ces résines, après réticulation, possèdent une transition vitreuse assez élevée pour des applications à haute température. L'objet de la présente invention est précisément de décrire ces résines, leur procédé de fabrication et leur réaction de polymérisation en masse.

D'une manière générale, les résines de l'invention peuvent être définies en ce qu'elles répondent à la formule générale

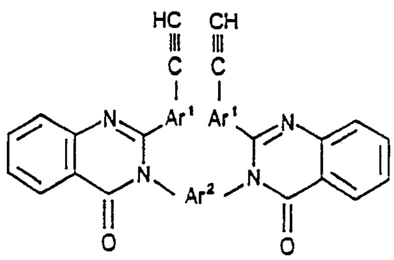

dans laquelle $Ar^1$ est un radical aromatique mono ou polycyclique divalent comprenant de 6 à 20 atomes de carbone ; lorsque $Ar^1$ comprend plusieurs cycles aromatiques, ceux-ci peuvent être accolés ou reliés entre eux par une simple liaison ou par l'intermédiaire d'un atome ou d'un groupement divalent tels que :

$$-CHOH- \;;\; -CO \;;\; -CH_2- \;;\; -S- \;;\; -SO_2- \;;\; -\underset{CF_3}{\overset{CF_3}{C}}- \;;\; -\underset{CH_3}{\overset{CH_3}{C}}- \text{ ou } -\underset{CH_3}{\overset{CH_3}{Si}}-O-$$

Le (ou les) cycles(s) aromatique(s) du radical $Ar^1$ peut (peuvent) être non substitué(s) ou substitué(s) par au moins un groupe alkyle de 1 à 3 atomes de carbone, de préférence par un groupe méthyle.

Dans le cadre de la présente invention, le groupement $Ar^1$ peut être un radical phénylène dont les deux valences sont de préférence en position méta. Parmi les radicaux naphtalènes, on préférera ceux dont les valences sont en position 1,4 ; 1,5 ; 2,5 ou 2,6. Parmi les radicaux $Ar^1$ comprenant deux noyaux phénylènes, on peut citer plus particulièrement les radicaux diphényléther, diphénylsulfure et diphényl-2,2′-perfluoro-propane, dont les valences disponibles pour la fixation au noyau quinazolone et à la fonction acétylène sont de préférence en position 4,4′ et 4,3′.

$Ar^2$ est un radical aromatique carbocyclique ou hétérocyclique divalent renfermant de 12 à 30 atomes de carbone et constitué d'au moins deux cycles aromatiques simples reliés deux à deux par des atomes ou des groupements divalents, par exemple des groupements aliphatiques ou perfluoro-aliphatiques divalents ou des hétéroatomes ou des groupements hétéro-atomiques divalents tels que

$$-O- \;;\; -S- \;;\; -SO_2- \;;\; \text{ou} \quad -\underset{CH_3}{\overset{CH_3}{Si}}O-.$$

Dans le cadre de l'invention, on peut citer avantageusement les radicaux bisphénoxyphénylsulfone et bisphénoxypyridine. Le choix des radicaux $Ar^1$ et $Ar^2$ est fait de telle sorte que la température de fusion ou de ramollissement de la résine soit de préférence de 80° C à 170° C. Pour atteindre cet objectif, les groupements flexibles pourront être introduits soit dans le radical $Ar^1$ soit dans le radical $Ar^2$.

Les résines de l'invention peuvent être préparées en utilisant diverses séquences de réaction. Cependant, on préfère utiliser le schéma suivant : une benzoxazinone contenant le motif acétylénique est préparée selon les équations 1 et 2 :

Equ. 1 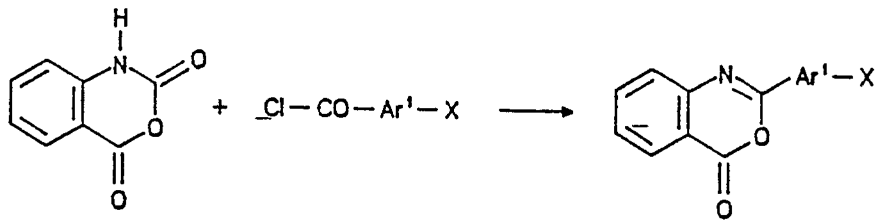

Equ. 2 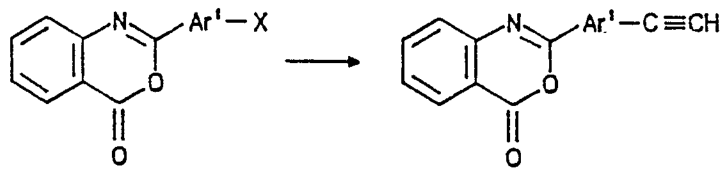

Selon l'équation 1, un chlorure d'acide aromatique halogéné (X est un halogène, de préférence brome ou iode) réagit sur l'anhydride isatoïque pour donner la benzoxazinone halogénée qui est éthynylée selon un procédé connu, selon l'équation 2.

La benzoxazinone éthynylée est ensuite condensée sur une diamine biprimaire à raison de deux moles environ de benzoxazinone éthynylée pour une mole de diamine.

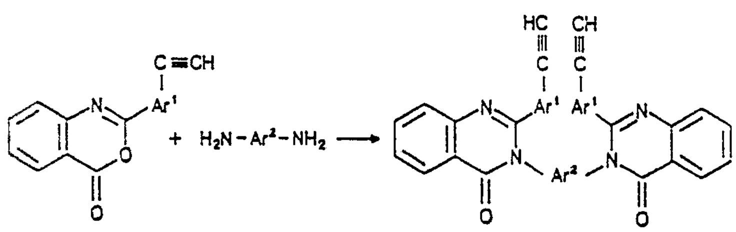

Cette dernière réaction peut être effectuée dans un solvant phénolique ou dans de la pyridine en présence de triphénylphosphite.

Les résines quinazolones de l'invention qui contiennent deux fonctions acétyléniques fixées sur des motifs quinazolones reliés entre eux par des groupements aromatiques ou hétérocycliques et des ponts flexibilisants, se présentent sous la forme de matériaux amorphes dont la température de ramollissement est comprise entre 80°C et 170°C. Ce caractère permet une polymérisation des acétyléniques à l'état condensé sous forme quasi liquide permettant un bon mouillage des surfaces, condition nécessaire pour que les résines présentent de bonnes propriétés adhésives.

La polymérisation de ces résines est effectuée par simple chauffage à une température comprise entre 180°C et 250°C.

Après polymérisation, la stabilité thermique est très bonne puisque la résine ne perd que 5 % de son poids initial à une température supérieure à 450°C sous air.

La température de transition vitreuse déterminée par analyse thermomécanique est supérieure à 280°C, ce qui permet une application à température élevée sans altération des propriétés mécaniques. Ces résines trouvent des applications en électronique pour la réalisation de colles thermostables conductrices ou isolantes et dans le domaine des matériaux structuraux pour préparer des matrices de composites.

Les exemples suivants illustrent l'invention sans en limiter la portée:

Exemple 1

Préparation de la [(triméthylsilyléthynyl)-4 phényl]-2 4(H) 1,3-benzoxazin-4-one (composé A).

On dissout 6,04 g (0,02 mole) de (bromo-4 phényl)-2 4(H) 1,3-benzoxazin-4-one dans un mélange de solvant composé de 80 cc de THF et 20 cc de triéthylamine. On chauffe la solution à la température de 70°C. On ajoute

alors 0,025 g d'acétate de palladium et 0,05 g de triphénylphosphine qui provoquent une coloration jaunâtre du milieu réactionnel. On ajoute goutte à goutte 2,45 g (0,025 mole) de triméthylsilylacétylène. On laisse évoluer la réaction pendant huit heures. On filtre ensuite le bromhydrate de triéthylamine avant évaporation sous vide des solvants. Le solide brun amorphe récupéré est recristallisé dans l'éther de pétrole. Le rendement de la réaction est de 65 %.

Exemple 2

Synthèse d'une quinazolone bis-acétylénique (résine B) à partir de la bis-(amino-3 phénoxy)-2,6 pyridine (composé B).

On dissout 8,85 g (0,027) mole du composé A et 3,87 g (0,0132 mole) du composé B dans 20 cc de pyridine. On ajoute ensuite 4,5 g de triphénylphosphite. Le mélange est alors chauffé à 100° C et maintenu à cette température pendant 10 heures. En fin de réaction, on évapore sous vide la pyridine. Le produit brut obtenu est dissous dans le méthanol. En versant cette solution dans l'eau on obtient un précipité blanc qui est filtré et séché sous vide. Le produit brut est recristallisé dans l'hexane. Le groupe protecteur triméthylsilyle est alors éliminé en traitant la quinazolone dans le méthanol avec $K_2CO_3$ pendant une heure à 25° C. Le rendement global est de 75 %.

Exemple 3

Synthèse d'une quinazolone bis-acétylénique (résine C) à partir de la bis-((amino-4-phénoxy)4-phényl)-2,2 propane (composé C).

Le procédé de synthèse est identique à celui décrit dans l'exemple précédent. Le produit brut obtenu est recristallisé dans un mélange hexane-acétate d'éthyle. L'élimination du groupe protecteur s'opère dans un mélange de solvants méthanol-benzène en présence de $K_2CO_3$ à 25° C. Le rendement est de 65 %.

Exemple 4

Synthèse d'une quinazolone bis-acétylénique (Résine D) à partir de la bis-((amino-4 phénoxy)-4 phényl)-sulfone (Composé D).

Les conditions de synthèse sont celles décrites aux exemples 2 et 3. La recristallisation du produit s'effectue dans un mélange hexane-acétate d'éthyle. Le groupe protecteur triméthylsilyle est éliminé avec la méthode présentée dans l'exemple 3. Le rendement global est de 62 %.

Exemple 5

Polymérisation d'une résine quinazolone bis-acétylénique.

La résine présentée dans l'exemple 4 peut subir un cycle de cuisson sous argon composé de trois paliers : 30 minutes à 175° C, 120 minutes à 240° C et 60 minutes à 310° C. Dans de telles conditions, la résine polymérisée présente une température de transition vitreuse à 325° C. Pour un même cycle de cuisson, la thermo-dégradation sous air de la résine polymérisée donne les résultats suivants :

| Perte de poids | 1 % | 5 % | 10 % |
|---|---|---|---|
| T° C | 435 | 484 | 525 |

Exemple 6

Tableau comparatif des températures de transition vitreuse avant et après polymérisation des résines présentées dans les exemples 2, 3, 4.

| RESINE | TG | |
|---|---|---|
| | avant cuisson | après cuisson* |
| B | 85 | 290 |
| C | 164 | 345 |
| D | 157 | 325 |

*Cycle de polymérisation sous argon : 2 heures à 230° C 1 heure à 320° C

**Revendications**

1/ Résine quinazolone thermodurcissable caractérisée en ce qu'elle répond à la formule générale :

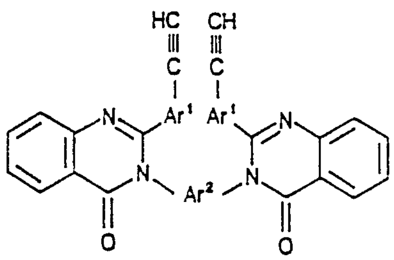

dans laquelle $Ar^1$ est un radical aromatique divalent mono- ou polycyclique de 6 à 20 atomes de carbone, non substitué ou substitué par au moins un groupe alkyle de 1 à 3 atomes de carbone, $Ar^2$ est un radical aromatique divalent carbocyclique ou hétérocyclique de 12 à 30 atomes de carbone comprenant au moins deux cycles aromatiques simples reliés deux à deux par des atomes ou des groupements divalents.

2/ Résine quinazolone thermodurcissable selon la revendication 1, caractérisée en ce qu'elle présente une température de fusion ou de ramollissement de 80 à 170° C.

3/ Résine quinazolone thermodurcissable selon l'une des revendications 1 et 2, caractérisée en ce que le radical $Ar^1$ comprend plusieurs cycles aromatiques accolés ou reliés entre eux par une liaison simple ou un atome ou groupement divalent.

4/ Résine quinazolone thermodurcissable selon la revendication 3, caractérisée en ce que le radical $Ar^1$ est un radical métaphénylène, un radical 1,4, 1,5, 2,5 ou 2,6 naphtalène, un radical 4,4′ (ou 4,3′) diphényléther, diphénylsulfure ou diphényl-2 2-perfluoro-propane.

5/ Résine quinazolone thermodurcissable selon l'une des revendications 1 à 4, caractérisée en ce que le radical $Ar^2$ est un radical bis-phénoxyphénylsulfone ou bis-phénoxypyridine.

6/ Procédé de préparation d'une résine quinazolone thermodurcissable selon l'une des revendications 1 à 5, caractérisé en ce que :(a) on fait réagir un chlorure d'acide aromatique halogéné de formule $Cl\text{-}CO\text{-}Ar^1\ X$ (où $Ar^1$ est défini comme dans l'une des revendications 1 à 5 et X est un atome d'halogène) avec de l'anhydride isatoïque pour donner la benzoxazinone halogénée correspondante de formule

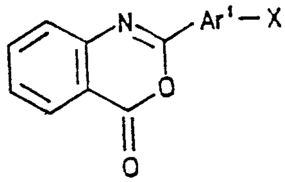

(b) on soumet ladite benzoxazinone halogénée à une réaction d'éthynylation pour donner une benzoxazinone éthynylée de formule

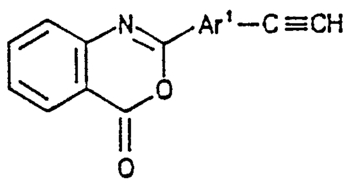

et (c) on condense ladite benzoxazinone éthynylée avec une diamine biprimaire de formule générale $H_2N\text{-}Ar^2\text{-}NH_2$ (où $Ar^2$ est défini comme dans l'une des revendications 1 à 5), en une proportion d'environ 2 moles de benzoxazinone éthynylée par mole de diamine.

7/ Utilisation d'une résine quinazolone thermodurcissable selon l'une des revendications 1 à 5, pour former un matériau durci par chauffage à une température de 180 à 250° C.

Office européen des brevets

# RAPPORT DE RECHERCHE EUROPEENNE

Numero de la demande

EP 89 40 0381

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| A | PATENT ABSTRACTS OF JAPAN vol. 8, no. 71 (C-217)(1508), 3 avril 1984; & JP - A - 58 222 111 (MITSUBISHI DENKI K.K.) 23.12.1983 --- | 1,6 | C 08 G 73/06<br>C 08 F 138/00 |
| A | CHEMICAL ABSTRACTS vol. 94, no. 12, 23 mars 1981, page 3, abrégé 84567s, Columbus, Ohio, US; F.L. HEDBERG:"An acetylene substituted quinoxaline with simultaneous thermosetting and intramolecular cycloaddition postcure capability"; & PREPR., DIV. PET. CHEM., AM. CHEM. SOC. 1979, 24(1), 258-261 --- | 1,2,7 | |
| A | CHEMICAL ABSTRACTS vol. 98, no. 4, 24 janvier 1983, page 1, abrégé no. 17074y, Columbus, Ohio, US; F.L. HEDBERG et al.:"The synthesis and thermal curing parameters of a novel quinoxaline monomer with terminal ethynyl thermoset and phenylethynylintramolecular cycloaddition postcure capability"; & J. POLYM. SCI., POLYM. CHEM. ED. 1982, 20(11), 2069-2078 --- | 1,2,7 | DOMAINES TECHNIQUES RECHERCHES (Int. Cl.4)<br>C 08 F 2/00<br>C 08 F 138/00<br>C 08 G 73/00 |
| A | DE-A-2 915 681 (DOW CHEMICAL CO.) * exemples 1-5; page 15, paragraphe 3 * --- | 1,2,7 | |
| A | US-A-4 263 461 (B.A. REINHARDT et al.) * revendications, exemple 3 * --- | 1,7 | |
| A | US-A-4 451 402 (G.F. D'ALELIO et al.) * revendications 1,21 * --- -/- | 1,7 | |

Le présent rapport a été établi pour toutes les revendications

| Lieu de la recherche | Date d'achèvement de la recherche | Examinateur |
|---|---|---|
| BERLIN | 03-05-1989 | HASS C V F |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
& : membre de la même famille, document correspondant

EPO FORM 1503 03.82 (P0402)

Office européen des brevets

# RAPPORT DE RECHERCHE EUROPEENNE

Numero de la demande

EP 89 40 0381

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| A | PATENT ABSTRACTS OF JAPAN vol. 9, no. 36 (C-266)(1759), 15 février 1985; & JP - A - 59 179 523 (KOGYO GIJUTSUIN) 12.10.1984 --- | 1,7 | |
| A | WO-A-8 101 293 (HUGHES AIRCRAFT CO.) * revendication 1 * --- | 1,4 | |
| A | CHEMICAL ABSTRACTS vol. 88, no. 6, 10 mars 1978, page 17, abrégé 62847g, Columbus, Ohio, US; R.F. KOVAR et al.:"Thermosetting plasticizers for high temperature quinoxaline thermoplastics"; & CHEM. PROP. CROSSLINKED POLYM., (PROC. ACS SYMP.) 1977 --- | 1 | |
| A | CHEMICAL ABSTRACTS vol. 87, no. 6, 8 août 1977, page 20, abrégé 40101m, Columbus, Ohio, US; R.F. KOVAR et al.:"Thermosetting acetylene-terminated poly(phenylquinoxalines); & J. POLYM. SCI., POLYM. CHEM. ED. 1977, 15(5), 1081-1095 --- | 1 | DOMAINES TECHNIQUES RECHERCHES (Int. Cl.4) |
| D,A | US-A-4 131 625 (F.E. ARNOLD et al.) * abrégé; colonne 1, formule (I) * --- | 1 | |
| A | CHEMICAL ABSTRACTS vol. 83, no. 14, 6 octobre 1975, page 40, abrégé 115493u, Columbus, Ohio, US; T.M. BEDNARSKI et al.:"H-resin processing"; & SOC. PLAST. ENG., TECH. PAP. 1975, 21, 92-91 ----- | 1 | |

Le présent rapport a été établi pour toutes les revendications

| Lieu de la recherche | Date d'achèvement de la recherche | Examinateur |
|---|---|---|
| BERLIN | 03-05-1989 | HASS C V F |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant